# FASCICULE DE BREVET EUROPEEN

(11) **EP 1 501 984 B1**
(45) Date de publication et mention de la délivrance du brevet: **29.03.2006**
(21) Numéro de dépôt: 03740683.2
(22) Date de dépôt: 29.04.2003
(51) Int. Cl.: E01D 19/00, E01D 22/00, F16F 7/12

(54) **PROCEDE DE PROTECTION D'OUVRAGES D'ART AVEC CABLES DE PRECONTRAINTE**
SICHERUNGSVERFAHREN FÜR INGENIEURBAUTEN MIT SPANNGLIEDERN
METHOD FOR PROTECTING WORKS OF ART WITH PRESTRESSING TENSIONED CABLES

(30) Priorité: 29.04.2002 FR 0205353
(43) Date de publication de la demande: 02.02.2005
(73) Titulaire: ECOLE CENTRALE DE NANTES, 44003 Nantes (FR); LABORATOIRE CENTRAL DES PONTS ET CHAUSSEES, 75015 Paris (FR)
(72) Inventeur: DANNAWI, Marwan, F-44240 La Chapelle sur Erdre (FR); BREVET, Pierre, F-44830 Bouaye (FR)
(74) Mandataire: Michelet, Alain
(86) Numéro de dépôt international: PCT/FR2003/001351
(87) Numéro de publication internationale: WO 2003/093581

(56) Documents cités:
- EP-A- 0 824 167

## Description

La présente invention concerne un procédé de protection d'ouvrages d'art ou autres structures de génie civil et bâtiment comprenant des câbles tendus de précontrainte extérieure et/ou des câbles porteurs et/ou des tirants. Elle concerne également l'équipement de sécurité utilisé pour la mise en oeuvre du procédé.

Les ouvrages d'art comme les ponts, comportent des armatures intégrées directement dans le béton. Ils comportent également des armatures extérieures, non intégrées dans le béton lui-même, constituées de gros câbles de tension encore appelés câbles de précontrainte. Ces câbles sont tendus entre des éléments de structure de l'ouvrage.

Ces câbles extérieurs de précontrainte peuvent avoir des longueurs de plusieurs dizaines de mètres. Ils sont tendus et ancrés sur des éléments de l'ouvrage qui font office de butées et ils peuvent également traverser d'autres éléments de l'ouvrage comme des parois ou cloisons.

Les extrémités de ces câbles comportent des moyens d'ancrage qui permettent de conserver la tension initiale de précontrainte.

Ces câbles sont généralement bien protégés mais il n'est pas rare de constater des ruptures dont les causes sont multiples : corrosion, surcharge, fatigue.

La rupture brutale d'un câble peut provoquer des désordres importants sur son environnement proche c'est-à-dire la structure de l'ouvrage et aussi les câbles voisins par exemple.

Entre les organes d'ancrage, les câbles traversent les éléments de l'ouvrage ; des orifices sont prévus dans ces éléments ou parois et les câbles sont guidés par les tubes de réservation prévus à cet effet au moment de la construction.

La présente invention propose un procédé qui permet de prévenir les conséquences des ruptures accidentelles de ces câbles.

Le procédé de protection selon l'invention, tel que défini par la revendication 1 annexée, de tronçon du cable brise. consiste à installer à l'embouchure de chaque orifice de passage du câble dans l'élément de structure, un équipement de sécurité qui est aménagé pour dégrader de façon irréversible et quasi instantanée, l'énergie libérée par la détente du câble lorsqu'il se rompt.

Cet équipement de sécurité prend en quelque sorte le relais des ancrages primitifs du câble et il peut être aménagé pour absorber une détente totale du câble, maîtrisant chaque tronçon du câble brisé.

Ce procédé consiste en fait à positionner sur le ou les câbles, un équipement de sécurité spécialement conçu pour des ouvrages existants anciens, et en particulier à habiller le ou les câbles au moyen d'un équipement qui comprend des pièces susceptibles d'être assemblées in situ après coup, pour envelopper le câble ou s'étendre de part et d'autre symétriquement.

Selon une variante, le procédé consiste à positionner l'équipement ou au moins une partie de cet équipement, simultanément à la réalisation de l'ouvrage et à l'installation du câble correspondant, par enfilage dudit équipement sur le câble de part et d'autre de chaque percée.

L'invention concerne également l'équipement de sécurité utilisé pour la mise en oeuvre du procédé de protection, lequel équipement est constitué : - d'une pièce fixée sur le câble, à distance de l'embouchure de l'orifice de passage dudit câble dans l'élément de structure et, entre cette pièce et ladite embouchure, d'au moins un dispositif d'absorption d'énergie, dont la longueur est adaptée à l'allongement du câble lors de sa mise sous tension, et dont la capacité d'absorption est programmée pour permettre son fonctionnement avec un effort contrôlé ayant une valeur maxi inférieure à l'effort d'adhérence et de rupture de frottement de la fixation de ladite pièce sur le câble.

Toujours selon l'invention, la pièce fixée sur le câble est constituée de deux demi-coquilles ou mors réalisés en acier, aluminium ou matériau composite ; ces demi-coquilles sont assemblées et serrées sur le câble par tout moyen approprié, vis, boulons et la pression de serrage est adaptée pour éviter un endommagement des constituants du câble, c'est-à-dire de sa gaine, des torons et du coulis.

Selon une autre disposition de l'invention, la surface interne des coquilles ou mors, en contact avec la périphérie du câble, est rugueuse pour améliorer son ancrage sur ledit câble ; cette surface interne peut par exemple comporter des stries obtenues par l'usinage d'un filetage dont le pas est par exemple de 1 à 3 mm.

Toujours selon l'invention, le dispositif d'absorption d'énergie correspond au dispositif ayant fait l'objet de la demande de brevet FR-02 05105 publiée en tant que FR-A-2839126 postérieurement à la date de priorité liée à la présente demande. Ce dispositif détaillé ci-après se présente sous la forme d'une gouttière métallique allongée dont la section est en forme de U ou oméga, de façon à envelopper partiellement le câble, et les flancs de cette gouttière sont reliés entre eux par des tirants et sont maintenus espacés au moyen d'entretoises.

Toujours selon l'invention, le dispositif d'absorption d'énergie est constitué, comme dans la demande de brevet précitée, d'une tôle pliée comprenant un fond et deux côtés latéraux légèrement convergents dont les rebords supérieurs, qui sont parallèles entre eux, sont munis d'orifices pour le passage des tirants.

Selon une autre disposition de l'invention, les côtés latéraux de ce dispositif absorbeur sont en forme de trapèze et son plan de l'extrémité fait un angle avec le plan de sa partie constituant le fond, de façon à initier progressivement la déformation du dispositif absorbeur en partant de l'arête dudit fond.

Selon une variante, le dispositif absorbeur se présente sous la forme d'une structure dont la section est fermée ou sous la forme de toute autre structure permettant une absorption d'énergie calibrée.

L'invention sera encore détaillée à l'aide de la description suivante et des dessins annexés, donnés à titre indicatif, et dans lesquels :
- la figure 1 représente, schématiquement, une portion d'un ouvrage d'art réalisé en béton armé et un câble tendu de précontrainte extérieure, protégé par le procédé selon l'invention ;
- la figure 2 représente l'équipement de sécurité installé sur un câble ;
- la figure 3 représente, vu en bout, le dispositif absorbeur d'énergie et les moyens qui permettent de l'assembler sur le câble ;
- la figure 4 représente, vu de côté, le dispositif absorbeur d'énergie ;
- la figure 5 représente à une échelle plus grande, les deux demi-coquilles ou mors destinés à être fixés sur le câble ;
- la figure 6 représente, vu de dessus, le dispositif absorbeur d'énergie déformé suite à une rupture de câble.

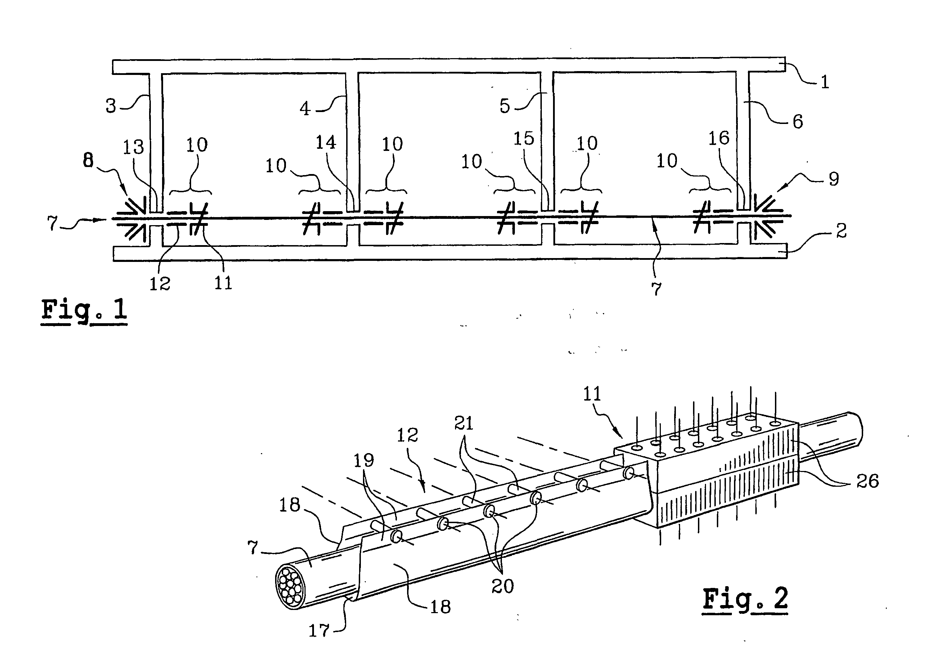

La figure 1 montre très schématiquement, une portion d'un ouvrage d'art comme par exemple une portion de pont, lequel comporte un tablier supérieur 1, un tablier inférieur 2 et des éléments de structure constitués par exemple de parois repérées 3, 4, 5 et 6.

Un câble 7 faisant office de câble de précontrainte externe est tendu entre les parois 3 et 6, maintenu tendu par des moyens d'ancrage 8 et 9 disposés au niveau des parois 3 et 6 respectivement, qui font office de butées.

Sur ce câble 7, on remarque, de chaque côté des parois un équipement 10 qui correspond à l'équipement de sécurité selon l'invention.

Cet équipement de sécurité 10, détaillé figures suivantes, comprend une pièce 11 constituant le marteau, fixée sur le câble 7 et un dispositif 12 permettant d'absorber l'énergie.

Le câble 7 traverse les différentes parois 3, 4, 5 et 6. Il est guidé dans des orifices 13, 14, 15 et 16 et en particulier dans des tubes de réservation prévus lors de la construction de l'ouvrage dans les parois 3, 4, 5 et 6. On remarque, figure 1, que des équipements de sécurité 10 sont disposés au niveau de chacune des embouchures des percées.

Ainsi, en cas de rupture du câble 7, à quelque endroit que ce soit, entre les parois 3 et 4, ou 4 et 5, ou 5 et 6, les équipements de sécurité 10 interviennent pour absorber l'énergie résultant de la détente du câble.

La figure 2 montre un équipement de sécurité constitué d'une pièce 11 fixée sur le câble 7 et un dispositif absorbeur 12 qui enserre ledit câble. Ce dispositif absorbeur correspond à celui qui a fait l'objet de la demande de brevet FR-02 05105.

Ce dispositif 12 est détaillé ci-après. Il se présente sous la forme d'une gouttière à section en U ou oméga. Cette gouttière est façonnée à partir d'une tôle pliée. Elle comprend un fond 17 et des parois latérales 18. Le fond 17 est plat, de forme rectangulaire ; les parois latérales 18 sont planes également et comportent à leur partie supérieure, un rebord 19. Ce rebord 19 est aménagé pour permettre l'installation de tirants 20 qui relient lesdites parois, fermant la gouttière sur le câble 7. Ces tirants 20 sont constitués de boulons par exemple et l'espace entre les rebords 19 des parois 18, est établi au moyen d'entretoises 21 en forme de tubes, enfilées sur lesdits tirants 20.

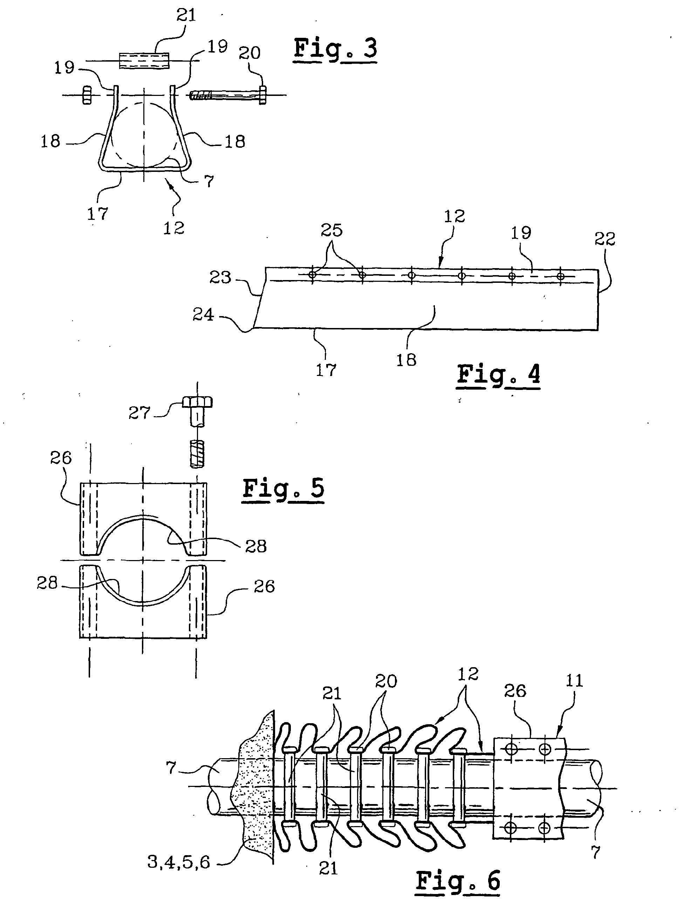

La figure 3 montre le dispositif absorbeur 12 en cours d'installation sur le câble 7. Ce dispositif absorbeur a une section qui se présente sous la forme d'un U ou oméga, enveloppant le câble 7. Les parois 18 sont légèrement inclinées par rapport au fond 17, se resserrant vers le haut. Les rebords supérieurs 19 des parois 18 permettent l'installation des tirants 20 et leur écartement est calibré au moyen des entretoises tubulaires 21.

Le dispositif absorbeur est monté glissant sur le câble 7.

La figure 4 montre le dispositif absorbeur 12 vu de côté. Ses parois latérales 18 se présentent sous la forme d'un trapèze rectangle. D'un côté, l'extrémité 22 de l'absorbeur est perpendiculaire au fond 17 ; cette extrémité 22 est en contact avec la pièce 11 constituant le marteau. L'autre extrémité 23 de l'absorbeur est inclinée, formant avec le fond 17 un angle inférieur à 90° de l'ordre de 80° par exemple.

Cette extrémité 23 correspond à l'extrémité qui est en contact avec l'embouchure de passage du câble au niveau de l'une des parois 3, 4, 5 ou 6. En fait, c'est l'arête 24 du fond 17 qui est en contact avec les parois, de façon à initier progressivement la déformation de l'absorbeur lors de son fonctionnement.

L'inclinaison de cette extrémité 23 permet un accroissement progressif de l'effort de déformation de l'absorbeur 12, lors de la rupture du câble et de l'écrasement de l'absorbeur par la pièce 11 qui fait office de marteau, contre la paroi correspondante.

On remarque, toujours figure 4, disposés dans le rebord supérieur 19 des parois latérales 18, les orifices 25 qui permettent le passage des tirants 20. Ces orifices 25 sont par exemple régulièrement espacés sur la longueur du dispositif absorbeur.

Cet absorbeur 12 est réalisé à partir d'une tôle en acier inoxydable ou tout autre matériau métallique, composite ou plastique. A titre indicatif, cette tôle peut avoir une épaisseur de l'ordre de 3 à 4 mm, façonnée sous la forme d'une gouttière pour envelopper un câble dont le diamètre est de l'ordre de 90 mm par exemple.

La longueur de l'absorbeur est choisie en fonction de la variation de longueur du câble à maîtriser au moment de sa détente.

L'effort de déformation de l'absorbeur est choisi de façon à être inférieur à l'effort de fixation de la pièce 11 sur le câble 7.

Ce câble 7 est généralement constitué de plusieurs torons enveloppés d'une gaine en matériau thermoplastique.

La pièce 11, comme représenté figure 5, est constituée de deux demi-coquilles 26 assemblées par vis ou boulons 27. Ces demi-coquilles 26 ont un alésage cylindrique dont la surface interne 28 est de préférence rugueuse pour mieux adhérer sur la périphérie du câble 7. Cette surface interne 28 comporte par exemple des stries correspondant à une sorte de filetage interne dont le pas est compris entre 1 et 3 mm par exemple ; ce filetage permet de bien ancrer chaque demi-coquille sur le câble, et d'éviter tout risque de glissement en dessous d'une valeur d'effort inférieure à celle qui correspond au fonctionnement de l'absorbeur 12.

Des vis ou boulons 27 traversent les deux demi-coquilles 26 ; leur nombre et le couple de serrage sont déterminés de façon à obtenir un effort d'adhérence sur le câble qui est nettement supérieur à l'effort nécessaire pour déformer le dispositif absorbeur 12.

La pièce Il peut être réalisée en acier, aluminium, ou en matériau composite, moulée ou non.

La figure 6 montre le dispositif absorbeur 12 vu de dessus, déformé sous l'action de la pièce 11, entre cette dernière et l'une des parois 3, 4, 5 ou 6, après rupture du câble 7. L'absorbeur 12 se déforme, par plis successifs, chaque pli étant délimité par les tirants 20.

Selon les besoins, on peut également prévoir l'installation de plusieurs absorbeurs 12, disposés en séries sur le câble 7, et séparés par une pièce de transition libre sur le câble, en forme de rondelle par exemple.

Chaque absorbeur 12 peut avoir une capacité d'absorption de la variation de longueur du câble correspondant à la longueur de ce câble entre deux parois adjacentes. Pour absorber une variation d'allongement du câble dont la longueur correspond à deux fois l'espace entre deux parois, on peut prévoir l'installation de deux dispositifs absorbeurs.

Bien souvent l'espace entre les câbles est très faible et l'accès relativement peu commode, aussi, la forme en gouttière de ces dispositifs absorbeurs permet leur installation sur des câbles d'ouvrages terminés.

Cette forme de gouttière pour l'absorbeur 12 facilite son montage sur les différents câbles et sa fixation par des tirants 20 est relativement simple également. Le serrage des rebords 19 se fait avec un couple calibré sur les entretoises 21, et non sur le câble.

De même, l'installation de la pièce 11 qui fait office de marteau est rendue possible par l'utilisation de deux demi-coquilles 26, l'une étant passée sous le câble et l'autre positionnée sur le câble, les deux assemblés par les vis ou boulons 27.

Toutefois, cet équipement de sécurité peut également être monté dès l'origine sur les câbles 7. Dans ce cas on peut aussi utiliser un dispositif absorbeur de section fermée par exemple en matériau métallique, composite ou plastique.

Cet équipement de sécurité peut également être utilisé sur tout type de câble tendu comme par exemple des suspentes, des haubans, des câbles porteurs, des tirants d'ancrage. Selon le cas, il peut se présenter comme détaillé auparavant sous la forme d'une gouttière qui enveloppe le câble ou sous la forme de dispositifs absorbeurs disposés de part et d'autre du câble, symétriquement.

Cet équipement de sécurité convient aussi pour tout type de câble et en particulier des câbles multifils, multitorons, gainés et injectés ou non de coulis de ciment ou autres.

## Revendications

1. Procédé de protection d'ouvrages d'art ou autres comprenant au moins un câble extérieur de précontrainte, installé entre des éléments de l'ouvrage ou parois faisant office de butées et d'autres éléments intermédiaires ou parois éventuelles, disposées entre ces derniers, lequel câble est guidé dans des orifices au travers desdits éléments ou parois, le procédé consistant à installer, à l'embouchure de chaque orifice, un équipement de sécurité (10) aménagé pour dégrader de façon irréversible et quasi instantanée, l'énergie libérée par la détente du câble (7) lorsque survient une rupture de ce dernier.

2. Procédé de protection selon la revendication 1, **caractérisé en ce qu'**il consiste à positionner sur le ou les câbles (7), un équipement de sécurité (10) spécialement conçu pour des ouvrages terminés, et en particulier **en ce qu'**il consiste à habiller le ou les câbles au moyen d'un équipement qui comprend des pièces susceptibles d'être assemblées in situ après coup, pour envelopper le câble et/ou s'étendre de part et d'autre de ce dernier, symétriquement.

3. Procédé de protection selon la revendication 1, **caractérisé en ce qu'**il consiste à positionner un équipement de sécurité (10) ou au moins une partie de cet équipement, simultanément à l'installation des câbles (7), par enfilage dudit équipement ou partie dudit équipement sur ledit câble avant et après chaque orifice de préférence.

4. Equipement de sécurité pour la mise en oeuvre du procédé selon l'une quelconque des revendications 1 à 3, **caractérisé en ce qu'**il comprend une pièce (11) fixée sur le câble (7), à distance de l'embouchure de l'orifice et, interposé entre les deux, au moins un dispositif d'absorption d'énergie (12), dont la longueur est adaptée à l'allongement du câble lors de sa mise sous tension, et dont la capacité d'absorption est programmée pour permettre son fonctionnement avec un effort contrôlé ayant une valeur maximum qui est inférieure à l'effort de rupture de la fixation de ladite pièce (11) sur ledit câble.

5. Equipement de sécurité selon la revendication 4, **caractérisé en ce que** la pièce (11) fixée sur le câble (7) est constituée de deux demi-coquilles (26) assemblées par tout moyen approprié du genre vis (27), boulons.

6. Equipement de sécurité selon la revendication 5, **caractérisé en ce que** la surface interne de chaque demi-coquille (26) est rugueuse, comportant par exemple des stries en forme de filetage dont le pas est de l'ordre de 1 à 3 mm.

7. Equipement de sécurité selon l'une quelconque des revendications 4 à 6, **caractérisé en ce que** le dispositif (12) d'absorption d'énergie se présente sous la forme d'une gouttière métallique allongée dont la section correspond à un U ou un oméga de façon à envelopper partiellement le câble (7), les parois latérales (18) de cette gouttière sont reliés entre eux par des tirants (20) et l'espace entre les rebords supérieurs (19) desdites parois (18) est maintenu et calibré au moyen d'entretoises (21) centrées sur lesdits tirants.

8. Equipement de sécurité selon la revendication 7, **caractérisé en ce que** le dispositif absorbeur (12) est constitué d'une tôle pliée comprenant un fond (17), des côtés latéraux (18) légèrement convergents dont les rebords supérieurs sont munis des orifices (25) permettant le passage des tirants (20).

9. Equipement de sécurité selon l'une quelconque des revendications 7 ou 8, **caractérisé en ce que** les côtés latéraux (18) du dispositif absorbeur (12) sont en forme de trapèze rectangle, l'une de ses extrémités (22) étant perpendiculaire à son fond (17), en contact avec la pièce (11) faisant office de marteau, et l'autre extrémité (23) étant inclinée, faisant un angle de l'ordre de 80° avec ledit fond (17) de façon à initier progressivement la déformation du dispositif absorbeur, partant de l'arête (24) dudit fond.

10. Equipement de sécurité selon l'une quelconque des revendications 4 à 9, **caractérisé en ce qu'**il comprend une pièce (11) fixée sur le câble et plusieurs dispositifs absorbeurs (12) placés bout à bout, séparés par une pièce de transition.

11. Equipement de sécurité selon l'une quelconque des revendications 4 à 7 et 10, **caractérisé en ce que** le dispositif d'absorption d'énergie (12) se présente sous la forme d'une structure dont la section est fermée.

## Patentansprüche

1. Sicherungsverfahren für Ingenieurbauten oder dergleichen mit mindestens einem äußeren Spannseil, das zwischen Elementen des Baus oder Wänden, die als Widerlager dienen, und anderen möglichen Zwischenelementen oder -wänden, welche zwischen letzteren angeordnet sind, installiert ist, wobei das Seil in Öffnungen durch die Elemente oder Wände geführt ist, wobei das Verfahren darin besteht, daß eine Sicherheitsvorrichtung (10) an der Mündung jeder Öffnung installiert wird, um die durch das Entspannen des Seils beim Reißen desselben freigesetzte Energie irreversibel und quasi sofort abzubauen.

2. Sicherungsverfahren nach Anspruch 1, **dadurch gekennzeichnet, daß** es das Positionieren einer Sicherheitsvorrichtung (10) an dem Seil oder den Seilen (7) vorsieht, die speziell für abgeschlossene Bauten ausgelegt ist, und daß es insbesondere das Verkleiden des Seiles oder der Seile mittels einer Vorrichtung umfaßt, die Teile aufweist, welche nachträglich vor Ort zusammensetzbar sind, um das Seil zu umhüllen und/oder sich symmetrisch zu beiden Seiten desselben zu erstrecken.

3. Sicherungsverfahren nach Anspruch 1, **dadurch gekennzeichnet, daß** es vorsieht, daß gleichzeitig mit dem Installieren der Seile (7) eine Sicherheitsvorrichtung (10) oder mindestens eines Teils dieser Vorrichtung durch Auffädeln der Vorrichtung oder des Teils der Vorrichtung auf das Seil vorzugsweise vor und nach jeder Öffnung montiert wird.

4. Sicherheitsvorrichtung zur Durchführung des Verfahrens nach einem der Ansprüche 1 bis 3, **dadurch gekennzeichnet, daß** sie ein mit Abstand von der Mündung der Öffnung an dem Seil (7) angebrachtes Teil (11) und zwischen diesen beiden mindestens eine Energieabsorptionsvorrichtung (12) aufweist, deren Länge an die Streckung des Seils beim Spannen desselben angepaßt ist und deren Absorptionsfähigkeit so abgestimmt ist, daß ihr Funktionieren mit einer kontrollierten Kraft möglich ist, deren maximaler Wert geringer als die Bruchlast der Befestigung des Teils (11) an dem Seil.

5. Sicherheitsvorrichtung nach Anspruch 4, **dadurch gekennzeichnet, daß** das an dem Seil (7) befestigte Teil (11) aus zwei Halbschalen (26) gebildet ist, die durch jedes geeignete Mittel vom Schrauben- oder Bolzentyp (27) zusammengesetzt sind.

6. Sicherheitsvorrichtung nach Anspruch 5, **dadurch gekennzeichnet, daß** die Innenfläche jeder Halbschale (26) rauh ist, wobei sie beispielsweise Riefen in Form eines Gewindes mit einer Steigung in der Größenordnung von 1 bis 3 mm aufweist.

7. Sicherheitsvorrichtung nach einem der Ansprüche 4 bis, 6, **dadurch gekennzeichnet, daß** die Energieabsorptionsvorrichtung (12) in Form einer langgestreckten Metallrinne (12) ausgebildet ist, deren Querschnitt einem U oder einem Omega entspricht, so daß sie das Seil (7) teilweise umgibt, wobei die Seitenwände (18) der Rinne durch Zugbolzen (20) miteinander verbunden sind und der Abstand zwischen den oberen Rändern (19) der Wände (18) durch auf die Zugbolzen zentrierte Distanzstücke (21) beibehalten und kalibriert ist.

8. Sicherheitsvorrichtung nach Anspruch 7, **dadurch gekennzeichnet, daß** die Absorptionsvorrichtung (12) aus einem gebogenen Blech mit einem Boden (17) und leicht konvergierenden Seiten (18) besteht, deren obere Ränder mit Öffnungen (25) zum Durchführen der Zugbolzen (20) versehen sind.

9. Sicherheitsvorrichtung nach einem der Ansprüche 7 oder 8, **dadurch gekennzeichnet, daß** die Seiten (18) der Absorptionsvorrichtung (12) die Form eines rechtwinkligen Trapezes aufweisen, wobei eines ihrer Enden (22) senkrecht zum Boden (17) verläuft und in Kontakt mit dem als Hammer dienenden Teil (11) ist, und das andere Ende (23) unter einem Winkel von 80° zum Boden (17) geneigt ist, um die Verformung der Absorptionsvorrichtung ausgehend von der Kante (24) des Bodens fortschreitend zu initiieren.

10. Sicherheitsvorrichtung nach einem der Ansprüche 4 bis 9, **dadurch gekennzeichnet, daß** sie ein an dem Seil befestigtes Teil (11) und mehrere Absorptionsvorrichtungen (12) aufweist, die in Stoßverbindung angeordnet und durch ein Übergangsteil getrennt sind.

11. Sicherheitsvorrichtung nach einem der Ansprüche 4 bis 7 und 10, **dadurch gekennzeichnet, daß** die Energieabsorptionsvorrichtung (12) in Form einer Struktur mit geschlossenem Querschnitt vorliegt.

## Claims

1. A method for protecting civil engineering works or others including at least one external prestressing cable, mounted between elements of the civil engineering works or walls serving as stops and other intermediate elements or optional walls, arranged therebetween, which cable is guided into orifices through said elements or walls, the method consisting in installing, at the mouthpiece of each orifice, a safety equipment (10) arranged for degrading irreversibly and quasi instantly, the energy released by the relaxed cable (7) when said cable breaks off.

2. A protection method according to claim 1, **characterised in that** it consists in positioning on the cable(s) (7), a safety equipment (10) especially designed for finished civil engineering works, and in particular **in that** it consists in dressing the cable(s) by means of an equipment which comprises parts liable to be assembled in situ at a later stage, for enveloping the cable and/or extending on both sides thereof, symmetrically.

3. A protection method according to claim 1, **characterised in that** it consists in positioning a safety equipment (10) or at least one portion of said equipment, simultaneously to the installation of the cables (7), by mounting said equipment or a portion of said equipment on said cable before and after each orifice preferably.

4. A safety equipment for implementing the method according to any one of claims 1 to 3, **characterised in that** it includes a part (11) attached to the cable (7), distally from the mouthpiece of the orifice and, interposed therebetween, at least one energy absorption device (12), whereof the length is suited to the lengthening of the cable where tension is applied thereto, and whereof the absorption capacity is programmed to enable the operation thereof with a controlled load having a maximum value which is smaller than the parting load of the attachment of said part (11) on said cable.

5. A safety equipment according to claim 4, **characterised in that** the part (11) attached to the cable (7) is composed of two semi-shells (26) assembled by any appropriate means such as screws (27), bolts.

6. A safety equipment according to claim 5, **characterised in that** the internal surface of each semi-shell (26) is rough, including for instance thread-shaped scores whereof the pitch is of the order of 1 to 3 mm.

7. A safety equipment according to any one of claims 4 to 6, **characterised in that** the energy absorption device (12) is in the form of a elongated metal gutter whereof the section corresponds to a U or an omega in order to wrap partially the cable (7), the lateral walls (18) of this gutter are connected together by tension rods (20) and the space between the upper rims (19) of said walls (18) is maintained and calibrated by means of spacers (21) centred on said tension rods.

8. A safety equipment according to claim 7, **characterised in that** the absorbing device (12) consists of a folded metal sheet including a base (17), slightly convergent lateral sides (18) whereof the upper rims are fitted with orifices (25) letting through the tension rods (20).

9. A safety equipment according to any one of claims 7 or 8, **characterised in that** the lateral sides (18) of the absorbing device (12) are in the form of a rectangular trapezoid, one of its ends (22) being perpendicular to its base (17), in contact with the part (11) serving as a hammer, and the other end (23) being tilted, forming an angle of the order of 80° with said base (17) in order to initiate gradually the deformation of the absorbing device, starting from the ridge (24) of said base.

10. A safety equipment according to any one of claims 4 to 9, **characterised in that** it includes a part (11) attached to the cable and several absorbing devices (12) placed end to end, separated by a transition part.

11. A safety equipment according to any one of claims 4 to 7 and 10, **characterised in that** the energy absorption device (12) is in the form of a structure whereof the section is closed.
